# EUROPEAN PATENT SPECIFICATION

(11) **EP 2 716 396 B1**
(45) Date of publication and mention of the grant of the patent: **09.09.2020**
(21) Application number: 12789220.6
(22) Date of filing: 18.05.2012
(51) Int. Cl.: B21D 5/06, B21D 53/92, F23R 3/06, F23R 3/00, F02C 7/18, F02C 7/00, F01D 11/08, B23K 20/02, B23K 1/00, B23K 101/00

(54) **HOLLOW CURVED PLATE, METHOD FOR MANUFACTURING SAME, AND BURNER FOR GAS TURBINE**
HOHLE GEKRÜMMTE PLATTE, HERSTELLUNGSVERFAHREN DAFÜR UND BRENNER FÜR EINE GASTURBINE
PLAQUE CINTRÉE CREUSE, SON PROCÉDÉ DE FABRICATION ET BRÛLEUR POUR TURBINE À GAZ

(30) Priority: 24.05.2011 JP 2011115655
(43) Date of publication of application: 09.04.2014
(73) Proprietor: Mitsubishi Hitachi Power Systems, Ltd., Yokohama 220-8401 (JP)
(72) Inventor: AKAGI Koichi, Tokyo 108-8215 (JP); OMAE Katsuyoshi, Tokyo 108-8215 (JP); OHASHI Kunihiro, Tokyo 108-8215 (JP); FUJII Toshio, Tokyo 108-8215 (JP); MICHINISHI Junya, Tokyo 108-8215 (JP); MACHIDA Fumiko, Tokyo 108-8215 (JP)
(74) Representative: Mader, Joachim
(86) International application number: PCT/JP2012/062873
(87) International publication number: WO 2012/161142

(56) References cited:
- EP-A2- 1 306 619
- GB-A- 1 503 921
- GB-A- 2 192 705
- JP-A- 55 148 151
- JP-A- 62 167 910
- JP-A- 2009 186 118
- JP-A- 2010 187 420

## Description

### [Technical Field]

The present invention relates to a hollow curved plate having a hollow part formed inside, a manufacturing method of the same and a combustor of a gas turbine which uses this hollow curved plate.

### BACKGROUND ART

It has been practiced to cool a combustor by feeding a cooling medium to a hollow part of a hollow curved plate. For instance, a combustor of a gas turbine is known, in which a combustor basket and a transition piece are formed by hollow curved plates, and cooling air is fed to the hollow part of this hollow curved plate to cool the combustor.

For instance, described in Patent Literature 1 is to manufacture a combustor basket of a gas turbine combustor by bonding by liquid phase diffusion bonding an outer plate in which an air flow groove is formed and an inner plate without a groove (see paragraph 0010 and FIG.1). Document GB1 503 921 discloses a method of manufacturing a combustion chamber for a gas turbine engine, whereby a plurality of grooves is machined in a surface of each of two sheets of metal and where after the two sheets of metal are bonded into an annular member. Document GB2 192 705 discloses a similar porous sheet structure for a combustion chamber. The structure comprises two sheets which have a pattern of shallow grooves in their facing surfaces and which are bonded together. Holes extend through each sheet to respective intersections of channels or channel ends to provide a tortuous airflow path through the structure. The holes have a diameter that is smaller than the portion of the grooves to which said holes open. Document EP 1306 619 A2 discloses a combustor having hollow curved plates being provided channels and cooling apertures to allow the flow of cooling air into and through the channels. The apertures have a large diameter such that they extend over more than one the channels, thereby weakening the structure of the hollow plate.

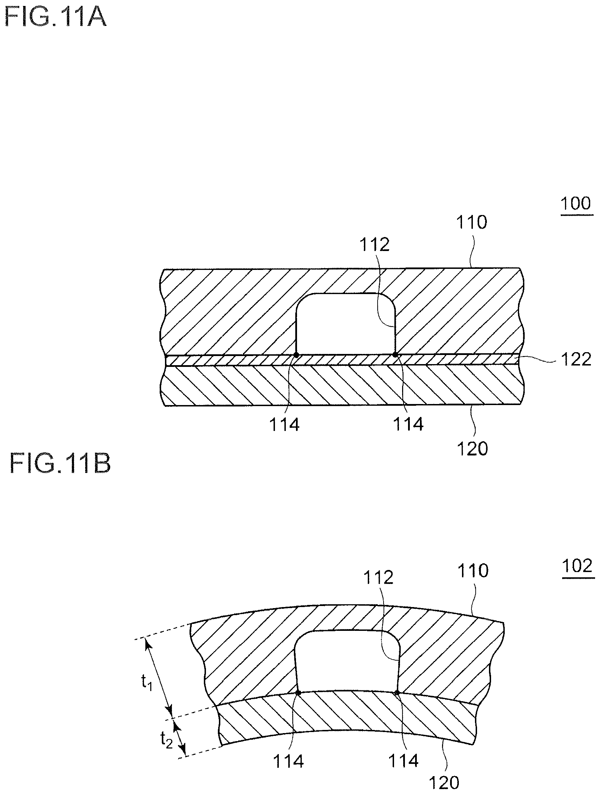

The process of manufacturing a conventional hollow curved plate is as follows. FIG.11A and FIG.11B illustrate manufacturing of the conventional hollow curved plate. FIG.11A illustrates a state in which a pair of plates is bonded by liquid phase diffusion bonding. FIG.11B illustrates a state in which the bonded pair of plates undergoes bending.

First, as illustrated in FIG.11A, between a grooved flat plate 110 in which a groove 112 is formed and a grooveless flat plate 120 in which no groove is formed, an insert metal (brazing filler material) 122 containing an element for lowering a melting point, such as boron, is arranged and is heated to a prescribed temperature at which only the insert metal 122 melts. The insert metal 122 is melted by heating, and in response to this, the element for lowering the melting point within the insert metal 122 diffuses toward base materials (the grooved plate 110 and the grooveless plate 120). Then, by holding at the prescribed temperature, concentration of the melting-point-lowering element in the insert metal 122 decreases and this causes the melting point of the insert metal 122 to increase, which results in isothermal solidification of the insert metal 122. At last, the insert metal 122 completely solidifies and concentration of the melting-point-lowering element becomes even through the diffusion. As a result, composition around the bond interface becomes uniform. In this manner, liquid phase diffusion bonding of the grooved plate 110 and the grooveless plate 120 proceeds.

Lastly, a hollow flat plate 100 (see FIG.11A) formed by the grooved plate 110 and the grooveless plate 120 bonded in the above manner is curved by bending, so as to obtain a hollow curved plate 102 illustrated in FIG.11B.

### [Citation List]

### [Patent Literature]

[PTL 1]
JP 5-44927A

### SUMMARY

### [Technical Problem]

In the conventional hollow curved plate 102, as illustrated in FIG.11B, corners 114 of the groove 112 exist at a bonded part between the grooved plate 110 and the grooveless plate 120 and stress concentrates on these corners 114 during bending, which may result in generation of cracks.

Further, some hollow curved plates 102 are used in an environment where a temperature difference occurs between the plate on an outer circumferential side (the grooved plate 110 in the example of FIG.11B) and the plate on an inner circumferential side (the grooveless plate 120 in the example of FIG.11B). For instance, in the case of the hollow curved plate forming a combustor basket or a transition piece of a gas turbine combustor, the plate on the inner circumferential side being exposed to high-temperature combustion gas becomes hot compared to the plate on the outer circumferential side.

As described above, when the temperature difference occurs between the plate on the outer circumferential side and the plate on the inner circumferential side, the stress caused by difference in thermal extension between the plates concentrates on the corners 114 of the groove 112, which may result in generation of cracks.

In view of the above issues, it is an object of the present invention to provide a hollow curved plate and a manufacturing method of the same which make it possible to suppress generation of cracks during bending and in a usage environment, and a combustor of a gas turbine .

### [Solution to Problem]

The above problems are solved by a hollow curved plate in accordance with claim 1, a combustor in accordance with claim 6 and a method in accordance with claim 7.

A hollow curved plate comprises:
a first plate member having a first groove; and
a second plate member having a second groove of approximately the same width as the first groove, the second plate member being bonded to the first plate member by diffusion bonding, and
the first groove faces the second groove, a position of the first groove substantially coincides with a position of the second groove in a width direction, and a hollow part is formed by the first groove and the second groove, and
the hollow curved plate is formed of the first plate member and the second plate member curved by bending in a state where the first plate member and the second plate member are bonded together.
In this specification, "approximately the same" or "substantially coincide with" means that two comparison objects are practically the same or coincide with each other while allowing for manufacturing tolerance.

In this hollow curved plate, the hollow part is formed of the first groove and the second groove by positioning so that the position of the first groove of the first plate member substantially coincides with the position of the second groove of the second plate member in the width direction, the second groove having approximately the same width as the first groove. Therefore, it is possible to avoid formation of the corners 114 (see FIG.11B) which could be a cause of stress concentration. This suppresses generation of cracks during the bending operation and in the usage environment.

In the above hollow curved plate, it is preferable that a relationship 0.9 ≤ T₁ / T₂ ≤ 1.1 is satisfied, where T₁ is a thickness of the first plate member and T₂ is a thickness of the second plate member.

By setting the thickness T₁ of the first plate member and the thickness T₂ of the second plate member to satisfy the above relationship, the bond interface between the first plate member and the second plate member is disposed near the center of the hollow curved plate in a thickness direction. The part near the center of the hollow curved plate in the thickness direction is a part (a so-called neutral axis) where deformation is less likely to occur compared with an inner circumferential part and an outer circumferential part, and is located at an intermediate position between the inner circumferential part shrinking under compression stress during the bending operation and the outer circumferential part stretching under tensile stress during the bending operation. Therefore, by setting the thickness T₁ of the first plate member and the thickness T₂ of the second plate member to satisfy the above relationship, it is possible to dispose the bond interface between the first plate member and the second plate member closer to the neutral axis and to effectively suppress generation of cracks during the bending operation.

In contrast, it is necessary in the conventional hollow curved plate 102 to form the groove 112 in the grooved plate 110. In this case, it is inevitable to set a thickness t₁ of the grooved plate 110 larger than a thickness t₂ of the grooveless plate 120. Therefore, the bond interface between the grooved plate 110 and the grooveless plate 120 is disposed far from the neutral axis, and during the bending operation, the bond interface is likely to be subjected to significant compression stress or tensile stress, which results in generation of cracks in the bond interface.

Further, the thickness T₁ of the first plate member and the thickness T₂ of the second plate member may be approximately the same.

As a result, the bond interface between the first plate member and the second plate member can be brought even closer to the neutral axis, thereby effectively suppressing generation of cracks during the bending operation.

It is preferable that the first plate member and the second plate member have approximately the same shape.

As a result, the first plate member and the second plate member can be communalized and the production cost can be reduced. Further, as the first plate member and the second plate member are not confused one with the other, it is possible to effectively conduct a manufacturing operation of the hollow curved plate.

In the inventive hollow curved plate, the first plate member and the second plate member may be bonded together by solid phase diffusion bonding in which an insert metal is not used.

In the case where the plate members are bonded using the insert metal 122 by liquid phase diffusion bonding similarly to the case of the conventional hollow curved plate 102, a melting-point-lowering element contained in the insert metal 122 can embrittle a base material. In view of this, as described above, by boding the first plate member and the second plate member by solid phase diffusion bonding without using the insert metal, it is possible to prevent embrittling of the base metal, which is caused by the melting-point-lowering element contained in the insert metal, and also to improve formability during the bending operation.

Further, in the hollow curved plate according to the present invention, grooves (the first groove and the second groove) are formed respectively on the first plate member and the second plate member as described above. Thus, by bonding the plate members together using the insert metal, the melted insert metal flows into the groove located below, which may partially block the hollow part. In this perspective, by bonding the first plate member and the second plate member together by solid phase diffusion bonding without using the insert metal, it is possible to prevent blocking of the hollow part caused by the melted insert metal and also to easily form the hollow part of a desired shape.

Further, as the insert metal which is made of a different material from that of the first plate member or the second plate member is not used, the first plate member and the second plate member become more recyclable. Furthermore, as the insert metal is not used, it is possible to skip a step of arranging the insert metal between the first plate member and the second plate member.

The above hollow curved plate is used to configure a combustor of a gas turbine which comprises: a combustor basket in which fuel is combusted; and a transition piece for leading combustion gas generated by combustion of the fuel in the combustor basket to a turbine. More specifically, the above hollow curved plate may be used to configure at least one of the combustor basket or the transition piece such that the combustor basket or the transition piece is cooled by a cooling medium introduced to the hollow part of the hollow curved plate.

The above hollow curved plate is capable of suppressing generation of cracks during the bending operation and in the usage environment. Thus, the combustor of the gas turbine can be configured with high reliability by using the above-described hollow curved plate.

A manufacturing method of a hollow curved plate member according to the present invention comprises the steps of:
overlapping a first plate member having a first groove and a second plate member having a second groove of approximately the same width as the first groove so that the first groove faces the second groove and a position of the first groove substantially coincides with a position of the second groove in a width direction;
bonding by diffusion bonding the first plate member and the second plate member having been overlapped; and
curving the bonded first and second plate members by bending, and
the first groove and the second groove form a hollow part.

According to this manufacturing method, the hollow part is formed of the first groove and the second groove overlapped so that the position of the first groove of the first plate member substantially coincides with the position of the second groove of the second plate member in the width direction, the second groove having approximately the same width as the first groove. Therefore, it is possible to avoid formation of the corners 114 (see FIG.11B) which could cause stress concentration. This suppresses generation of cracks during the bending operation and in the usage environment.

In the above manufacturing method of the hollow curved plate member, a positioning hole may be formed in each of the first plate member and the second plate member, and in the step of overlapping, positioning of the first plate member and the second plate member may be performed by inserting a pin in the positioning holes of the first plate member and the second plate member so that the position of the first groove substantially coincides with the position of the second groove in the width direction.

The first plate member and the second plate member are positioned by inserting the pin in the positioning holes in the manner described above, so that the position of the first groove can substantially coincide with the position of the second groove in the width direction with precision. Therefore, it is possible to reliably avoid formation of the corners which could be a cause of stress concentration. This suppresses generation of cracks during the bending operation and in the usage environment.

Alternatively, a projection may be provided in one of the first plate member or_the second plate member and a depression may be provided in the other of the first plate member and the second plate member, and in the overlapping step, positioning of the first plate member and the second plate member may be performed by fitting the projection in the depression so that the position of the first groove substantially coincides with the position of the second groove in the width direction.

Thus, by positioning the first plate member and the second plat member by fitting the projection in the depression, the positions of the first groove and the second groove can coincide in the width direction with precision, and generation of cracks can be suppressed effectively during the bending operation and in the usage environment.

### [Advantageous Effects]

According to the present invention, the hollow part is formed of the first groove and the second groove by positioning so that the position of the first groove of the first plate member substantially coincides with the position of the second groove of the second plate member in the width direction, the second groove having approximately the same width as the first groove. Therefore, it is possible to avoid formation of the corners which could cause stress concentration. This suppresses generation of cracks during the bending operation and in the usage environment.

### BRIEF DESCRIPTION OF DRAWINGS

[FIG.1] FIG.1 is a cross-sectional view of a peripheral configuration of a combustor of a gas turbine.
[FIG.2] FIG.2 is an illustration of a configuration example of a hollow curved plate according to anembodiment of the invention.
[FIG.3] FIG.3 is a cross-sectional view of the hollow curved plate illustrated in FIG.2.
[FIG.4] FIG.4 is a cross-sectional view of a hollow flat plate before bending.
[FIG.5A] FIG.5A is a view illustrating a shape of a hollow part.
[FIG.5B] FIG.5B is a view illustrating another example of the shape of the hollow part.
[FIG.6A] FIG.6A illustrates one example of positioning of a first plate member and a second plate member.
[FIG.6B] FIG.6B illustrates another example of positioning of the first plate member and the second plate member.
[FIG.6C] FIG.6C illustrates yet another example of positioning of the first plate member and the second plate member.
[FIG.7] FIG.7 is an illustration of a peripheral configuration of a ring segment of a gas turbine.
[FIG.8A] FIG.8A is a cross-sectional view of the ring segment of the gas turbine along a radial direction of a rotor.
[FIG.8B] FIG.8B is an enlarged view of section A of FIG.8A.
[FIG.9] FIG.9 is an oblique view of a configuration example of a nozzle skirt of a rocket engine.
[FIG.10] FIG.10 is a fragmentary illustration of a cross-section of the nozzle skirt along line B-B of FIG.9.
[FIG.11A] FIG.11A illustrates manufacturing of a conventional hollow curved plate in a state where a pair of plates is bonded by liquid phase diffusion bonding.
[FIG.11B] FIG.11B illustrates the manufacturing of the conventional hollow curved plate in a state where the bonded plates undergo bending.

### DETAILED DESCRIPTION

An embodiment of the present invention will now be described in detail with reference to the accompanying drawings. It is intended, however, that unless particularly specified in these embodiments, dimensions, materials, and shapes of components, their relative arrangement, and the like shall be interpreted as illustrative only and not limitative of the scope of the present invention.

### (First embodiment, in accordance with the invention )

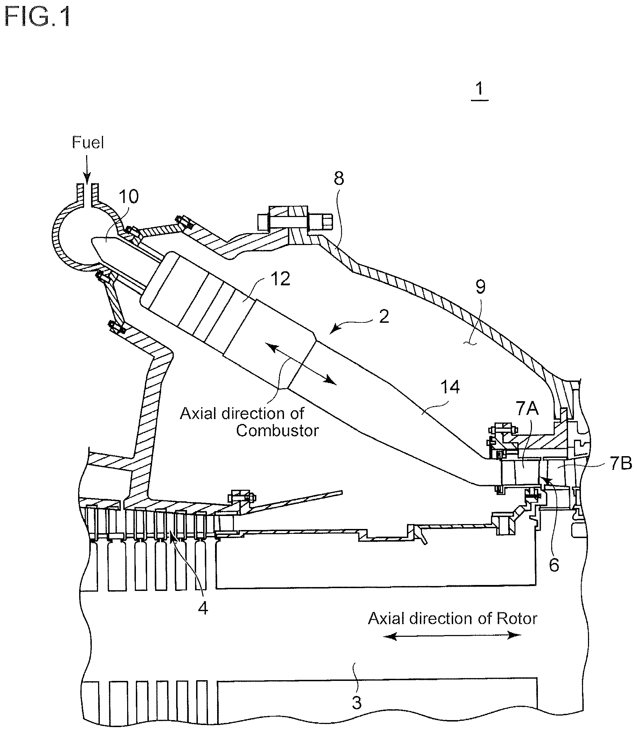

In an inventive embodiment a hollow curved plate as a component of a gas turbine combustor is described. FIG.1 is a cross-sectional view of a peripheral configuration of the combustor of a gas turbine.

As illustrated in FIG.1, a gas turbine 1 is formed by a combustor 2, a compressor 4 and a turbine 6. The combustor 2 is housed in a casing interior space 9 between the compressor 4 and the turbine 6. The casing interior space 9 is formed around a rotor 3 by a casing 8 and has approximately an annular shape. Although only one combustor 2 is illustrated in FIG.1, in reality there is more than one combustor 2 arranged in the circumferential direction of the rotor 3.
FIG.1 also illustrates vanes 7A and blades 7B of the turbine 6.

The combustor 2 includes a nozzle 10 for ejecting fuel, a combustor basket (combustor liner) 12 where the fuel ejected from the nozzle 10 is combusted, and a transition piece 14 for leading the combustion gas produced in the combustor basket 12 toward the turbine 6. The combustor basket 12 and the transition piece 14 have inside a channel for cooling air and are formed at least in part by the hollow curved plate which is described in details below.

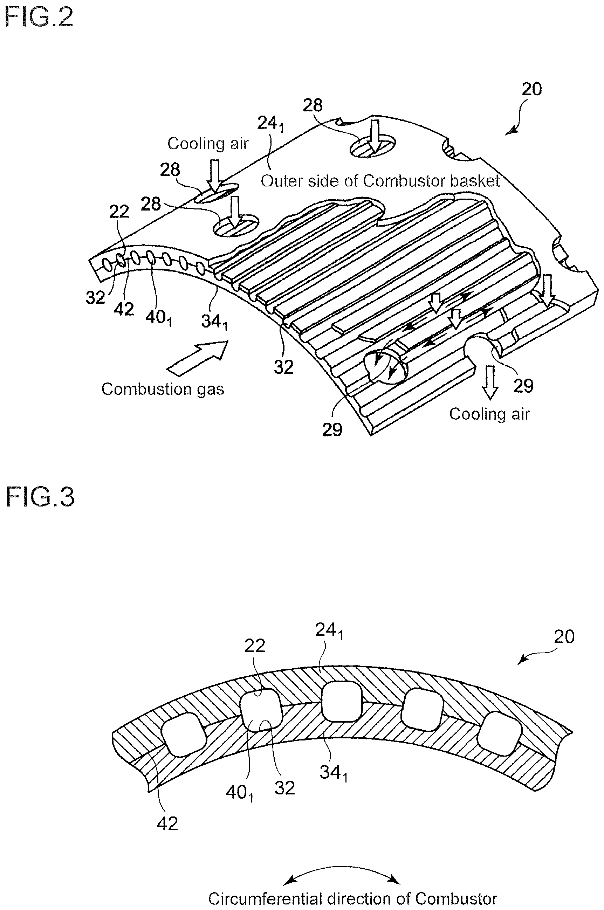

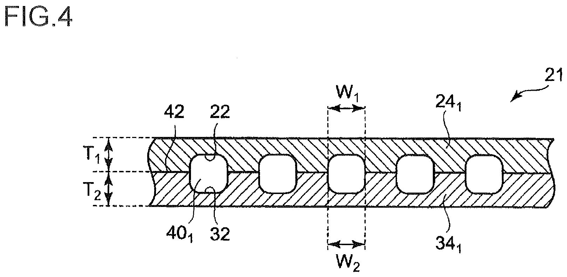

FIG.2 is an illustration of a configuration example of the hollow curved plate according to the inventive embodiment. FIG.3 is a cross-sectional view of the hollow curved plate illustrated in FIG.2. FIG.4 is a cross-sectional view of a hollow flat plate before bending.

As illustrated in FIG.2 and FIG.3, the hollow curved plate 20 includes a first plate member 24₁ and a second plate member 34₁. The first plate member 24₁ has a first groove 22 formed therein. The second plate member 34₁ has a second groove 32 formed therein and is arranged on an inner side of the first plate member 24₁. Inside the hollow curved plate 20, a plurality of hollow parts 40₁ each formed by the first groove 22 and the second groove 32 is formed. Each of the hollow parts 40₁ is formed into a linear channel where the cooling air flows. The hollow curved plate 20 is obtained by bending a hollow flat plate 21 illustrated in FIG.4 into a curved shape, for example through press forming. The shape of the hollow curved plate 20 in cross-section may be an annular shape continuing annularly in the circumferential direction of the combustor, or may be an arc shape which is split in the circumferential direction of the combustor. In the case where the hollow curved plate 20 is annular in cross-section, the combustor basket 12 or the transition piece 14 can be formed by one hollow curved plate 20. In contrast, in the case where the hollow curved plate 20 is arc-shaped in cross-section, the combustor basket 12 or the transition piece 14 can be formed by connecting a plurality of the hollow curved plates 20.

As materials of the first plate member 24₁ and the second plate member 34₁, there are heat-resisting materials such as SUS material, and nickel-based alloys (Hastelloy and Tomilloy, both registered trademark), for instance.

As illustrated in FIG.2 and according to the invention, a plurality of air suction holes 28 is provided in the first plate member 24₁ and a plurality of air discharge holes 29 is provided in the second plate member 34₁. The air suction holes 28 and the air discharge holes 29 each are bigger in diameter than the width of the hollow part 40₁ and open to at least one hollow part 40₁. The cooling air flowing outside the first plate member 24₁ enters the hollow part 40₁ from the air suction holes 28 of the first plate member 24₁. Then, the cooling air flows through the hollow part 40₁ and is discharged from the air discharge holes 29 of the second plate member 34₁. The cooling air discharged from the air discharge holes 29 mixes in the combustion gas flowing inside the second plate member 34₁ and flows with the combustion gas toward the turbine 6.

The hollow flat plate 21 is manufactured, as illustrated in FIG.4, by bonding the first plate member 24₁ and the second plate member 34₁. A width W1 of the first groove 22 of the first plate member 24₁ is approximately the same as a width W2 of the second groove 32 of the second plate member 34₁. Further, the first groove 22 faces the second groove 32 such that the position of the first groove 22 coincides with the position of the second groove 32 in the width direction. In this manner, the hollow part 40₁ is formed by the first groove 22 and the second groove 32.

The shape of the hollow part 40₁ may be arbitrarily adjusted by adjusting a shape of a tool for cutting the first groove 22 and the second groove 32.

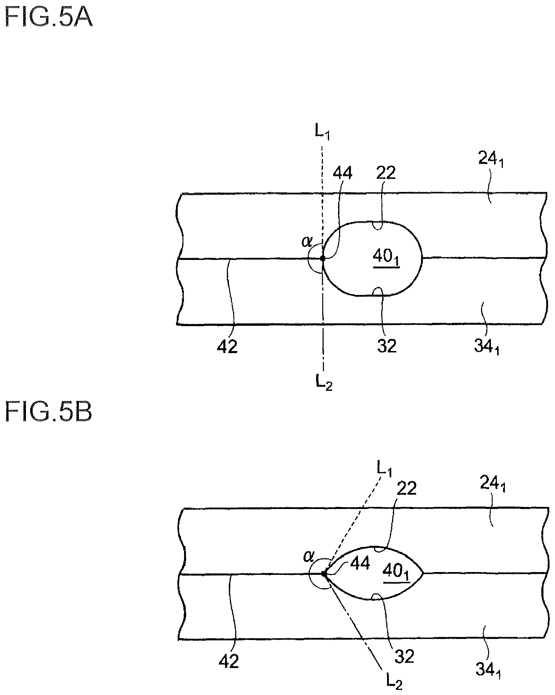

FIG.5A and FIG.5B show examples of the shape of the hollow part 40₁. In the example of FIG.5A, an angle α formed by a tangent line L₁ of the first groove 22 and a tangent line L2 of the second groove 32 at a position 44 corresponding to edges of the grooves (22, 32) in a bond interface 42 between the first plate member 24₁ and the second plate member 34₁ is 180 degrees. In the example of FIG.5B, the angle α formed by the tangent line L₁ of the first groove 22 and the tangent line L2 of the second groove 32 at the position 44 is greater than 180 degrees. That is to say, as illustrated in FIG.5A and FIG.5B, the angle α formed by the tangent line L1 of the first groove 22 and the tangent line L2 of the second groove 32 at the position 44 may be set to 180 degrees or greater.

The tangent line L1 of the first groove 22 is, to be specific, a tangent line of the first groove 22 extending from the position 44 toward the first plate member 24₁. Similarly, the tangent line L₂ of the second groove 32 is, to be specific, a tangent line of the second groove 32 extending from the position 44 toward the second plate member 34₁.

Further, as illustrated in FIG.5A and FIG.5B, the first groove 22 and the second groove 32 are rounded into a surface that has no part whose shape is discontinuous (a corner which causes a sudden shape change), thereby preventing stress concentration on the discontinuous-shape part. Both end edges of the first groove 22 and the second groove 32 may be chamfered.

It is preferable that a relationship 0.9 ≤ T₁ / T₂ ≤ 1.1 is satisfied, where T₁ is a thickness of the first plate member 24₁ and T₂ is a thickness of the second plate member 34₁ (see FIG.4). It is particularly preferable that the thickness T₁ of the first plate member 24₁ is approximately the same as the thickness T₂ of the second plate member 34₁.

As a result, the bond interface 42 between the first plate member 24₁ and the second plate member 34₁ is arranged closer to a neutral axis of deformation during bending, and thus generation of cracks near the bond interface 42 during the bending is effectively suppressed.

It is preferable that the first plate member 24₁ and the second plate member 34₁ have approximately the same shape. More specifically, the thickness T₁ of the first plate member 24₁ is approximately the same as the thickness T₂ of the second plate member 34₁, the first groove 22 and the second groove 32 have approximately the same shape, and the first groove 22 and the second groove 32 are arranged approximately at the same position.

As a result, the first plate member 24₁ and the second plate member 34₁ can be communalized and the production cost can be reduced. Further, as the first plate member 24₁ and the second plate member 34₁ are not confused one with the other, it is possible to effectively conduct a manufacturing operation of the hollow curved plate 20.

The first plate member 24₁ and the second plate member 34₁ are bonded by diffusion bonding. More specifically, the first plate member 24₁ and the second plate member 34₁ are bonded using any one of liquid phase diffusion bonding which uses an insert metal, solid phase diffusion bonding which uses an insert metal, and solid phase diffusion bonding which does not use an insert metal.

Particularly, the solid phase diffusion bonding which does not use an insert metal is preferable from the standpoint of improving formability of the hollow curved plate 20 during the bending operation, as it does not cause embrittlement of the base material attributable to the melting-point-lowering element derived from the insert metal. Further, in the solid phase diffusion bonding which does not use the insert metal, there is no blocking of the hollow part by the melted insert metal and thus, it is possible to easily form the hollow part 40₁ of a desired shape. Further, as the insert metal which is made of a different material from that of the first plate member 24₁ or the second plate member 34₁ is not used, the first plate member 24₁ and the second plate member 34₁ become more recyclable. Furthermore, as the inserting metal is not used, it is possible to skip a step of arranging the insert metal between the first plate member 24₁ and the second plate member 34₁.

In the case where the first plate member 24₁ and the second plate member 34₁ are made of a homogeneous metal, as bonding conditions of the solid phase diffusion bonding without using the insert metal, it is possible to set the temperature to 60 to 75% of a melting point (°C) of the first plate member 24₁ and the second plate member 34₁, and to use a mean contact pressure of pressing of 3 to i8MPa. For instance, in the case where the material of the first plate member 24₁ and the second plate member 34₁ is a nickel-base alloy (Hastelloy) having a melting point of 1533 to 1628°C, the first plate member 24₁ and the second plate member 34₁ may be bonded by solid phase diffusion bonding which does not use an insert metal while pressing the first plate member 24₁ and the second plate member 34₁ at a mean contact pressure of 3 to i8MPa and maintaining the temperature at 1000 to 1150°C.

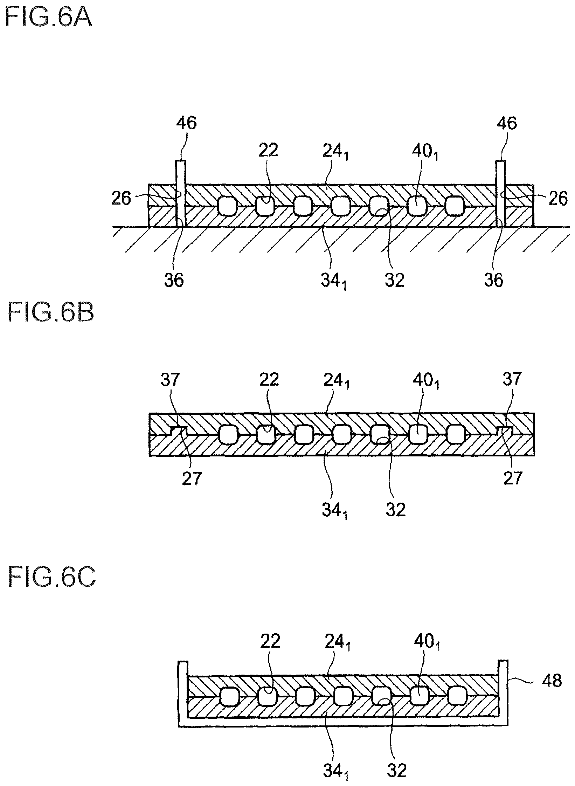

Prior to bonding of the first plate member 24₁ and the second plate member 34₁, it is necessary to overlap the first plate member 24₁ and the second plate member 34₁ so that a position of the first groove 22 substantially coincides with a position of the second groove 32 in the width direction. However, the positions of the first groove 22 and the second groove are not visible from outside in some cases. Therefore, in this embodiment, positioning of the first plate member 24₁ and the second plate member 34₁ is performed in the following manner. FIG.6A to FIG.6C illustrate the positioning of the first plate member 24₁ and the second plate member 34₁.

In the example illustrated in FIG.6A, positioning holes (26, 36) are formed at ends on both sides of the grooves (22, 32) of the first plate member 24₁ and the second plate member 34₁ (preferably in four corners of the first plate member 24₁ and the second plate member 34₁). Then, a pin 46 is inserted in these positioning holes (26, 36). As a result, the positioning of the first plate member 24₁ and the second plate member 34₁ is performed and the position of the first groove 22 substantially coincides with the position of the second groove 32 in the width direction.

In the example illustrated in FIG.6B, depressions 27 are formed on a surface contacting the second plate member 34₁ at ends on both sides of the grooves 22 of the first plate member 24₁. In contrast, projections 37 are formed on a surface contacting the first plate member 24₁ at ends on both sides of the grooves 32 of the second plate member 34₁. Then, the projections 37 of the second plate member 34₁ are fitted in the depression 27 of the first plate member 24₁ so that the position of the first groove 22 substantially coincides with the position of the second groove 32 in the width direction.

Alternatively, the projection may be provided in the first plate member 24₁, and the depression may be provided in the second plate 34₁ so that the projection in the first plate member 24₁ is fitted in the depression in the second plate 34₁.

In the example illustrated in FIG.6C, the first plate member 24₁ and the second plate member 34₁ are overlapped within a positioning frame 48 manufactured to fit the size of the first plate member 24₁ and the second plate member 34₁. As a result, the positioning of the first plate member 24₁ and the second plate member 34₁ is performed and the position of the first groove 22 substantially coincides with the position of the second groove 32 in the width direction.

As described above, the hollow curved plate 20 of this embodiment includes the first plate member 24₁ having the first groove 22 and the second plate member 34₁ having the second groove 32 of the same width as the first groove 22 and bonded to the first plate member 24₁ by diffusion bonding. Further, the hollow curved plate 20 is formed of the first plate member 24₁ and the second plate member 34₁ curved by bending in a state where the first plate member 24₁ and the second plate member 34₁ are bonded together. Then, the first groove 22 faces the second groove 32, the position of the first groove 22 substantially coincides with the position of the second groove 32 in the width direction, and the hollow part 40₁ is formed by the first groove 22 and the second groove 32.

In this manner, the hollow part 40₁ is formed of the first groove 22 and the second groove 32 so that the position of the first groove 22 of the first plate member 24₁ substantially coincides with the position of the second groove 32 of the second plate member 34₁ in the width direction, the second groove 32 having approximately the same width as the first groove 22. Therefore, it is possible to avoid formation of the corners which could cause stress concentration. This suppresses generation of cracks during the bending operation and in the usage environment.

### (Second embodiment, not in accordance with the invention)

In a second embodiment, the hollow curved plate as a component of a ring segment of the gas turbine is described.

A hollow curved plate 50 of this embodiment has substantially the same configuration and manufacturing procedure as the hollow curved plate 20 of the embodiment, except that the first plate member, the second plate member and the hollow part are shaped differently. Thus, the same reference numerals are given without adding explanations for those configurations that are the same as the hollow curved plate 20, and mainly the configuration of the hollow curved plate 50 that is different from the hollow curved plate 20 is explained.

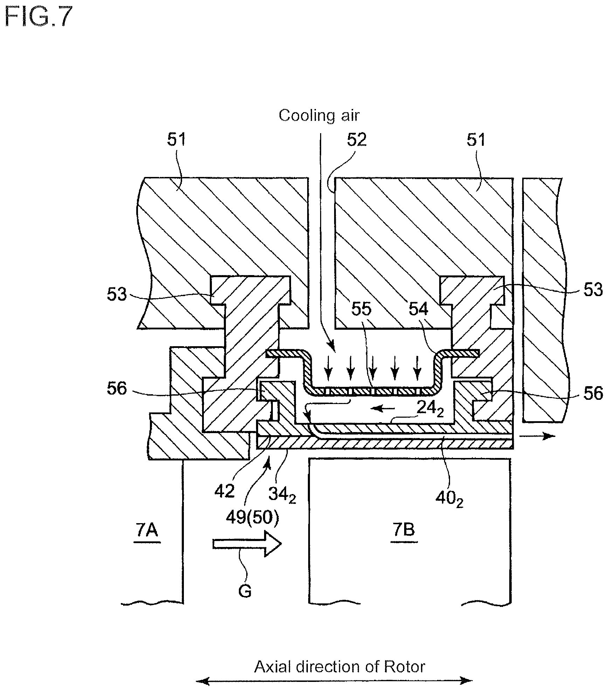

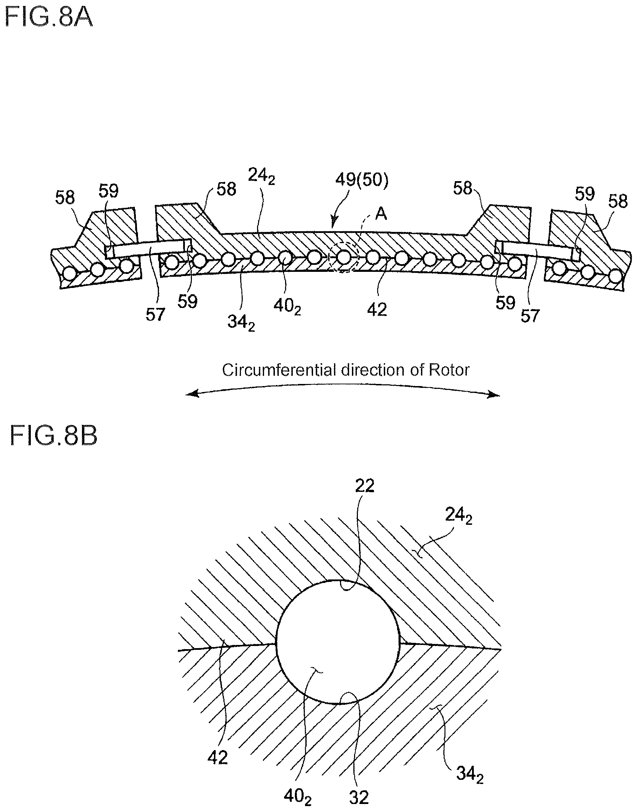

FIG.7 is an illustration of a peripheral configuration of the ring segment of the gas turbine. FIG.8A is a cross-sectional view of the ring segment of the gas turbine along the radial direction of the rotor. FIG.8B is an enlarged view of section A of FIG.8A.

As the high temperature combustion gas produced in the combustor flows in the turbine of the gas turbine, a plurality of ring segments 49 having inside a hollow part 40₂ for cooling and shaped into an arc in cross-section is arranged in the circumferential direction of the rotor to form a wall of a combustion gas channel as illustrated in FIG.7.

As illustrated in FIG.7, a channel 52 is formed in a blade ring 51. The channel 52 opens toward the ring segment 49 and the cooling air flows inside the channel 52. Further, an isolation ring 53 is fixed to the blade ring 51. And to this isolation ring 53, the ring segment 49 and an impingement plate 54 are attached. The impingement plate 54 is arranged between the blade ring 51 and the ring segment 49. The impingement plate 54 is configured to eject the cooling air supplied from the channel 52 toward the ring segment 49 by means of a plurality of through-holes 55, thereby cooling the ring segment 49 from outside. Further, the cooling air enters the hollow part 40₂ provided in the ring segment 49, thereby cooling the ring segment 49 from inside. The hollow part 40₂ opens to an outer circumferential surface of the ring segment 49 at an upstream end in an axial direction of the rotor, and opens to an end surface of the ring segment 49 at a downstream end in the axial direction of the rotor. The ring segment 49 includes flanges 56 on an upstream side and a downstream side in the axial direction of the rotor, and is attached to the isolation ring 53 via this flange 56.

In FIG.6, G indicates a flow direction of the combustion gas, and the left side in the drawing is the upstream side in the axial direction of the rotor while the right side in the drawing is the downstream side in the axial direction of the rotor.

As illustrated in FIG.8A, a plurality of the ring segments 49 is arranged in the circumferential direction of the rotor, and a seal member 57 is provided between adjacent two of the ring segments 49. The seal member 57 is configured to prevent leaking of the combustion gas through a gap between adjacent two of the ring segments 49. The seal member 57 is fitted in a groove 59 provided on both ends 58 of the ring segment 49 in the circumferential direction of the rotor.

As illustrated in FIG.7 and FIG.8, the hollow curved plate 50 forming the ring segment 49 includes a first plate member 24₂ and a second plate member 34₂. The first plate member 24₂ has the first groove 22. The second plate member 34₂ has the second groove 32 which has almost the same width as the first groove 22. The second plate member 34₂ is bonded to the first plate member 24₂ by diffusion bonding. In this case, bonding of the first plate member 24₂ and the second plate member 34₂ is performed so that the first groove 22 faces the second groove 32 and the position of the first groove 22 substantially coincides with the position of the second groove 32 in the width direction, and the hollow part 40₂ is formed by the first groove 22 and the second groove 32. The curved shape of the hollow curved plate 50 is formed by bending in the state where the first plate member 24₂ and the second plate member 34₂ are bonded together.

### (Third embodiment, not in accordance with the invention)

A nozzle skirt of a rocket engine includes a cooling channel for a cooling medium (liquid hydrogen) to flow therethrough. In a third embodiment, a hollow curved plate as a component of the nozzle skirt of the rocket engine is described.

A hollow curved plate 70 of this embodiment has substantially the same configuration and manufacturing procedure as the hollow curved plate 20 of the embodiment, except that the first plate member, the second plate member and the hollow part are shaped differently. Thus, the same reference numerals are given without adding explanations for those configurations that are the same as the hollow curved plate 20, and mainly the configuration of the hollow curved plate 70 that is different from the hollow curved plate 20 is explained.

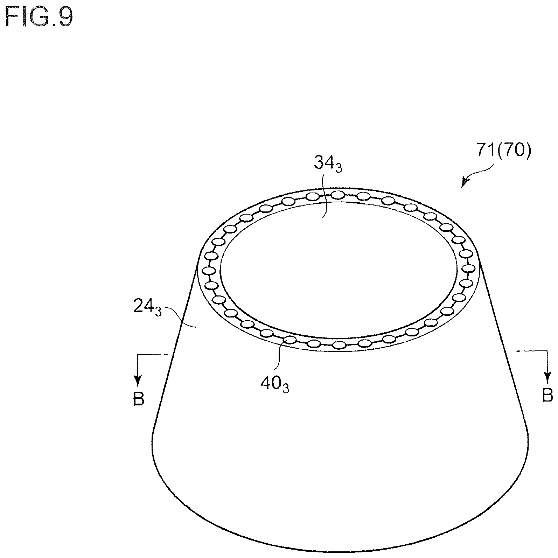

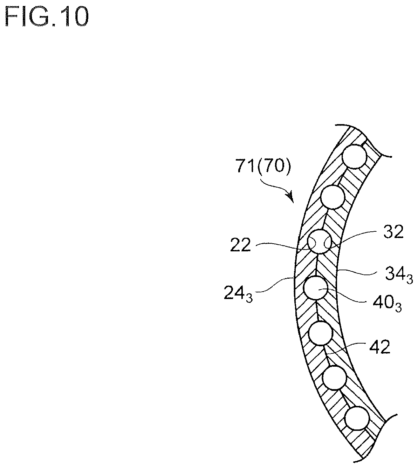

FIG.9 is an oblique view of a configuration example of the nozzle skirt of the rocket engine. FIG.10 is a fragmentary illustration of a cross-section of the nozzle skirt along line B-B of FIG.9.

As illustrated in FIG.9 and FIG.10, a nozzle skirt 71 has a cylindrical shape (a cylindrical shape with a side face inclined with respect to a center axis), and a plurality of hollow parts 40₃ as a cooling channel is provided inside the nozzle skirt 71. The hollow part 40₃ is a linear or spiral channel extending in the longitudinal direction of the nozzle skirt 71. Each end of the hollow part 40₃ opens to an end surface in the longitudinal direction of the nozzle skirt 71.

As illustrated in FIG.9 and FIG.10, the hollow curved plate 70 forming the nozzle skirt 71 includes a first plate member 24₃ and a second plate member 34₃. The first plate member 24₃ has the first groove 22. The second plate member 34₃ has the second groove 32 which has almost the same width as the first groove 22. The second plate member 34₃ is bonded to the first plate member 24₃ by diffusion bonding. In this case, bonding of the first plate member 24₃ and the second plate member 34₃ is performed so that the first groove 22 faces the second groove 32 and the position of the first groove 22 substantially coincides with the position of the second groove 32 in the width direction, and the hollow part 40₃ is formed by the first groove 22 and the second groove 32. The curved shape of the hollow curved plate 70 is formed by bending in the state where the first plate member 24₃ and the second plate member 34₃ are bonded together.

While an embodiment of the present invention has been described, the present invention is not limited thereto. It is obvious that various modifications and changes may be made without departing from the scope of the invention.

Further, in the above embodiments, the air is used as cooling medium for cooling the combustor of the gas turbine. However, for instance, steam may also be used, and thus the cooling medium is not particularly limited.

### [Reference Signs list]

- 1: Gas turbine
- 2: Combustor
- 3: Rotor
- 4: Compressor
- 6: Turbine
- 7A: Vane
- 7B: Blade
- 8: Casing
- 9: Casing interior space
- 10: Nozzle
- 12: Combustor basket
- 14: Transition piece
- 20: Hollow curved plate
- 21: Hollow flat plate
- 22: First groove
- 24₁-24₃ First: plate member
- 26: Positioning hole
- 27: Depression
- 28: Air suction hole
- 29: Air discharge hole
- 32: Second groove
- 34₁-34₃: Second plate member
- 36: Positioning hole
- 37: Projection
- 40₁-40₃: Hollow part
- 42: Bond interface
- 46: Pin
- 48: Positioning frame
- 49: Ring segment
- 50: Hollow curved plate
- 51: Blade ring
- 52: Channel
- 53: Isolation ring
- 54: Impingement plate
- 55: Through-hole
- 56: Flange
- 57: Seal member
- 58: End face
- 59: Groove
- 70: Hollow curved plate
- 71: Nozzle skirt

## Claims

1. A hollow curved plate (20, 50) for a gas turbine combustor comprising:
a first plate member (24₁-24₃) having a plurality of first grooves (22); and
a second plate member (34₁-34₃) having a plurality of second grooves (32), the second plate member (34₁-34₃) being bonded to the first plate member (24₁-24₃) by diffusion bonding,
wherein each first groove (22) faces a second groove (32) of approximately the same width as the first groove (22), a position of the first groove (22) substantially coincides with a position of the second groove (32) in a width direction, and a plurality of hollow parts (40₁-40₃) is formed, each formed by the first groove (22) and the second groove (32), and wherein each of the hollow parts is formed into a linear channel,
wherein the hollow curved plate (20, 50) is formed of the first plate member (24₁-24₃) and the second plate member (34₁-34₃) curved by bending in a state where the first plate member (24₁-24₃) and the second plate member (34₁-34₃) are bonded together,
wherein a plurality of air suction holes (28) is provided in the first plate member (24₁-24₃) and a plurality of air discharge holes (29) is provided in the second plate member (34₁-34₃), **characterized in that**
the air suction holes (28) and the air discharge holes (29) are each open only to any one of the hollow parts (40₁-40₃), each of the air suction holes (28) and the air discharge holes (29) having a diameter greater than the width of a whole of the any one of said hollow parts at which said each of the air suction holes (28) and the air discharge holes (29) opens.

2. The hollow curved plate (20, 50) according to claim 1,
wherein a relationship 0.9 ≤ T₁/ T₂ ≤ 1.1 is satisfied, where T₁ is a thickness of the first plate member (24₁-24₃) and T₂ is a thickness of the second plate member (34₁-34₃).

3. The hollow curved plate (20, 50) according to claim 2,
wherein the thickness T₁ of the first plate member (24₁-24₃) and the thickness T₂ of the second plate member (34₁-34₃) are approximately the same.

4. The hollow curved plate (20, 50) according to any one of claims 1 to 3,
wherein the first plate member (24₁-24₃) and the second plate member (34₁-34₃) have approximately the same shape.

5. The hollow curved plate (20, 50) according to claims 1 to 4,
wherein the first plate member (24₁-24₃) and the second plate member (34₁-34₃) are bonded together by solid phase diffusion bonding in which an insert metal is not used.

6. A combustor (2) of a gas turbine (1), comprising:
a combustor basket (12) in which fuel is combusted; and
a transition piece (14) for leading combustion gas generated by combustion of the fuel in the combustor basket (12) to a turbine (6),
wherein at least one of the combustor basket (12) or the transition piece (14) includes the hollow curved plate (20, 50) described in any one of claims 1 to 5 and is configured to be cooled by a cooling medium introduced to the hollow part (40₁-40₃) of the hollow curved plate (20, 50).

7. A manufacturing method of a hollow curved plate (20, 50) for a gas turbine combustor, comprising the steps overlapping a first plate member (24₁-24₃) having a plurality of first grooves (22) and a plurality of air suction holes (28) and a second plate member (34₁-34₃) having a plurality of air discharge holes (29) and a plurality of second grooves (32) so that each first groove (22) faces a second groove (32) of approximately the same width as the first groove (22), and a position of the first groove (22) substantially coincides with a position of the second groove (32) in a width direction;
bonding by diffusion bonding the first plate member (24₁-24₃) and the second plate member (34₁-34₃) having been overlapped; and
curving the bonded first (24₁-24₃) and second (34₁-34₃) plate members by bending to form a hollow curved plate (20, 50),
wherein the first groove (22) and the second groove (32) form a plurality of hollow parts (40₁-40₃), wherein each of the hollow parts is formed into a linear channel, **characterized in that**
the air suction holes (28) and the air discharge holes (29) are each open only to any one of the hollow parts (40₁-40₃), each of the air suction holes (28) and the air discharge holes (29) having a diameter greater than the width of a whole of the any one of said hollow parts at which said each of the air suction holes (28) and the air discharge holes (29) opens.

8. The manufacturing method of the hollow curved plate (20, 50) according to claim 7,
wherein a positioning hole (36) is formed in each of the first plate member (24₁-24₃) and the second plate member (34₁-34₃), and w
herein, in the step of overlapping, positioning of the first plate member (24₁-24₃) and the second plate member (34₁-34₃) is performed by inserting a pin (46) in the positioning holes (36) of the first plate member (241-243) and the second plate member (341-343) so that the position of the first groove (22) substantially coincides with the position of the second groove (32) in the width direction.

9. The manufacturing method of the hollow curved plate (20, 50) according to claim 7,
wherein a projection (37) is provided in one of the first plate member (24₁-24₃) or the second plate member (34₁-34₃) and a depression (27) is provided in the other of the first plate member (24₁-24₃) and the second plate member (34₁-34₃), and
wherein, in the overlapping step, positioning of the first plate member (241-243) and the second plate member (34₁-34₃) is performed by fitting the projection (37) in the depression (27) so that the position of the first groove (22) substantially coincides with the position of the second groove (32) in the width direction.

## Patentansprüche

1. Eine hohle gekrümmte Platte (20, 50) für eine Gasturbinenbrennkammer, umfassend:
ein erstes Plattenelement (241-243) mit einer Vielzahl von ersten Nuten (22); und
ein zweites Plattenelement (341-343) mit einer Vielzahl von zweiten Nuten (32), wobei das zweite Plattenelement (341-343) mit dem ersten Plattenelement (241-243) durch Diffusionsbonden verbunden ist,
wobei jede erste Nut (22) einer zweiten Nut (32) von ungefähr der gleichen Breite wie die erste Nut (22) gegenüberliegt, eine Position der ersten Nut (22) im Wesentlichen mit einer Position der zweiten Nut (32) in einer Breitenrichtung zusammenfällt und eine Vielzahl von hohlen Teilen (401-403) ausgebildet ist, die jeweils durch die erste Nut (22) und die zweite Nut (32) gebildet werden, und wobei jedes der hohlen Teile zu einem linearen Kanal ausgebildet ist,
wobei die hohle gekrümmte Platte (20, 50) aus dem ersten Plattenelement (241-243) und dem zweiten Plattenelement (341-343) gebildet ist, die durch Biegen in einem Zustand gekrümmt sind, in dem das erste Plattenelement (241-243) und das zweite Plattenelement (341-343) miteinander verbunden sind,
wobei eine Vielzahl von Luftansauglöchern (28) in dem ersten Plattenelement (241-243) vorgesehen ist und eine Vielzahl von Luftauslasslöchern (29) in dem zweiten Plattenelement (341-343) vorgesehen ist, **dadurch gekennzeichnet, dass** die Luftansauglöcher (28) und die Luftauslasslöcher (29) nur jeweils zu einem der hohlen Teile (401-403) hin offen sind, wobei jedes der Luftansauglöcher (28) und der Luftauslasslöcher (29) einen Durchmesser hat, der größer ist als die Breite eines gesamten der hohlen Teile, an denen sich jedes der Luftansauglöcher (28) und der Luftauslasslöcher (29) öffnet.

2. Die hohle gekrümmte Platte (20, 50) nach Anspruch 1,
wobei eine Beziehung 0,9 ≤ T1 / T2 ≤ 1,1 erfüllt ist, wobei T₁ eine Dicke des ersten Plattenelements (241-243) und T2 eine Dicke des zweiten Plattenelements (341-343) ist.

3. Die hohle gekrümmte Platte (20, 50) nach Anspruch 2,
wobei die Dicke T1 des ersten Plattenelements (241-243) und die Dicke T2 des zweiten Plattenelements (341-343) ungefähr gleich sind.

4. Die hohle gekrümmte Platte (20, 50) nach einem der Ansprüche 1 bis 3,
wobei das erste Plattenelement (241-243) und das zweite Plattenelement (341-343) ungefähr die gleiche Form haben.

5. Die hohle gekrümmte Platte (20, 50) nach den Ansprüchen 1 bis 4,
wobei das erste Plattenelement (241-243) und das zweite Plattenelement (341-343) durch Festphasen-Diffusionsbonden miteinander verbunden sind, bei dem kein Einsatzmetall verwendet wird.

6. Eine Brennkammer (2) einer Gasturbine (1), umfassend:
einen Brennkorb (12), in dem Brennstoff verbrannt wird; und
ein Übergangsstück (14) zum Leiten von Verbrennungsgas, das durch die Verbrennung des Brennstoffs im Brennkorb (12) erzeugt wird, zu einer Turbine (6),
wobei mindestens einer von dem Brennkorb (12) oder dem Übergangsstück (14) die hohle gekrümmte Platte (20, 50) nach einem der Ansprüche 1 bis 5 enthält und so konfiguriert ist, dass er durch ein Kühlmedium gekühlt wird, das in den hohlen Teil (401-403) der hohlen gekrümmten Platte (20, 50) eingeführt wird.

7. Herstellungsverfahren einer hohlen gekrümmten Platte (20, 50) für eine Gasturbinenbrennkammer, das die folgenden Schritte umfasst
Überlappen eines ersten Plattenelements (241-243) mit einer Vielzahl von ersten Nuten (22) und einer Vielzahl von Luftansauglöchern (28) und eines zweiten Plattenelements (341-343) mit einer Vielzahl von Luftaustrittslöchern (29) und einer Vielzahl von zweiten Nuten (32), so dass jede erste Nut (22) einer zweiten Nut (32) von ungefähr der gleichen Breite wie die erste Nut (22) gegenüberliegt und eine Position der ersten Nut (22) im Wesentlichen mit einer Position der zweiten Nut (32) in einer Breitenrichtung übereinstimmt;
Verbinden durch Diffusionsschweißen, nachdem das erste Plattenelement (241-243) und das zweite Plattenelement (341-343) überlappt wurden; und
Biegen der verbundenen ersten (241-243) und zweiten (341-343) Plattenelemente durch Biegen, um eine hohle gekrümmte Platte (20, 50) zu bilden,
wobei die erste Nut (22) und die zweite Nut (32) eine Vielzahl von hohlen Teilen (401-403) bilden, wobei jedes der hohlen Teile zu einem linearen Kanal geformt ist, **dadurch gekennzeichnet, dass**
die Luftansauglöcher (28) und die Luftauslasslöcher (29) jeweils nur zu irgendeinem der hohlen Teile (401-403) offen sind, wobei jedes der Luftansauglöcher (28) und der Luftauslasslöcher (29) einen Durchmesser hat, der größer ist als die Breite eines gesamten der hohlen Teile, zu denen sich jedes der Luftansauglöcher (28) und der Luftauslasslöcher (29) öffnet.

8. Das Herstellungsverfahren der hohlen gekrümmten Platte (20, 50) nach Anspruch 7,
wobei jeweils ein Positionierungsloch (36) in dem ersten Plattenelement (241-243) und dem zweiten Plattenelement (341-343) ausgebildet ist, und
wobei in dem Schritt des Überlappens die Positionierung des ersten Plattenelements (241-243) und des zweiten Plattenelements (341-343) durch Einsetzen eines Stifts (46) in die Positionierungslöcher (36) des ersten Plattenelements (241-243) und des zweiten Plattenelements (341-343) durchgeführt wird, so dass die Position der ersten Nut (22) im Wesentlichen mit der Position der zweiten Nut (32) in der Breitenrichtung übereinstimmt.

9. Das Herstellungsverfahren der hohlen gekrümmten Platte (20, 50) nach Anspruch 7,
wobei ein Vorsprung (37) in einem von dem ersten Plattenelement (241-243) oder dem zweiten Plattenelement (341-343) vorgesehen ist und eine Vertiefung (27) in dem anderen von dem ersten Plattenelement (241-243) und dem zweiten Plattenelement (341-343) vorgesehen ist, und
wobei in dem Überlappungsschritt die Positionierung des ersten Plattenelements (241-243) und des zweiten Plattenelements (341-343) durch Einpassen des Vorsprungs (37) in die Vertiefung (27) durchgeführt wird, so dass die Position der ersten Nut (22) im Wesentlichen mit der Position der zweiten Nut (32) in der Breitenrichtung übereinstimmt.

## Revendications

1. Une plaque cintrée creuse (20, 50) pour un combusteur de turbine à gaz comprenant :
un premier élément de plaque (24₁, 24₃) avec une pluralité de premières gorges (22) ; et
un second élément de plaque (34₁, 34₃) avec une pluralité de secondes gorges (32), le second élément de plaque (34₁, 34₃) étant fixé au premier élément de plaque (24₁, 24₃) par soudage par diffusion,
dans laquelle chaque première gorge (22) est tournée vers une seconde gorge (32) ayant approximativement la même largeur que la première gorge (22), une position de la première gorge (22) coïncidant substantiellement avec une position de la seconde gorge (32) dans une direction de la largeur, et une pluralité de parties creuses (40₁, 40₃) étant formées, chacune formée par la première gorge (22) et la seconde gorge (32), et chacune des parties creuses étant formée en un canal linéaire,
dans laquelle la plaque cintrée creuse (20, 50) est formée sur le premier élément de plaque (24₁, 24₃) et le second élément de plaque (34₁, 34₃) est courbé par courbure dans un état où le premier élément de plaque (24₁, 24₃) et le second élément de plaque (34₁, 34₃) sont fixés l'un à l'autre,
dans laquelle une pluralité d'orifices d'aspiration d'air (28) sont formés dans le premier élément de plaque (24₁, 24₃) et une pluralité d'orifices de refoulement d'air (29) sont formés dans le second élément de plaque (34₁, 34₃), **caractérisée en ce que**
les orifices d'aspiration d'air (28) et les orifices de refoulement d'air (29) sont ouverts chacun vers l'une des parties creuses (40₁, 40₃), chacun des orifices d'aspiration d'air (28) et des orifices de refoulement d'air (29) ayant un diamètre supérieur à la largeur totale de l'une quelconque desdites parties creuses où s'ouvre chacun desdits orifices d'aspiration d'air (28) et orifices de refoulement d'air (29).

2. La plaque cintrée creuse (20, 50) selon la revendication 1,
dans laquelle une relation 0,9 ≤ T₁/T₂ ≤ 1,1 est vérifiée, T₁ étant une épaisseur du premier élément de plaque (24₁, 24₃) et T₂ étant une épaisseur du second élément de plaque (34₁, 34₃).

3. La plaque cintrée creuse (20, 50) selon la revendication 2,
dans laquelle l'épaisseur T₁ du premier élément de plaque (24₁, 24₃) et l'épaisseur T2 du second élément de plaque (34₁, 34₃) sont approximativement les mêmes.

4. La plaque cintrée creuse (20, 50) selon l'une des revendications 1 à 3,
dans laquelle le premier élément de plaque (24₁, 24₃) et le second élément de plaque (34₁, 34₃) ont approximativement la même forme.

5. La plaque cintrée creuse (20, 50) selon les revendications 1 à 4,
dans laquelle le premier élément de plaque (24₁, 24₃) et le second élément de plaque (341, 34₃) sont fixés l'un à l'autre par soudage par diffusion en phase solide sans utilisation d'insert métallique.

6. Un combusteur (2) d'une turbine à gaz (1), comprenant :
un panier de combusteur (12) dans lequel un combustible est mis en combustion ; et
une pièce de transition (14) pour diriger vers une turbine (6) les gaz de combustion générés par la combustion du combustible dans le panier de combusteur (12),
dans lequel au moins l'un du panier de combusteur (12) ou de la pièce de transition (14) comprend la plaque cintrée creuse (20, 50) décrite dans l'une des revendications 1 à 5 et est configuré pour être refroidi par un fluide de refroidissement introduit dans la partie creuse (40₁, 40₃) de la plaque cintrée creuse (20, 50).

7. Un procédé de fabrication d'une plaque cintrée creuse (20, 50) pour un combusteur de turbine à gaz, comprenant les étapes suivantes :
recouvrement d'un premier élément de plaque (24₁, 24₃), avec une pluralité de premières gorges (22) et une pluralité d'orifices d'aspiration d'air (28), et d'un second élément de plaque (34₁, 34₃), avec une pluralité d'orifices de refoulement d'air (29) et une pluralité de secondes gorges, de telle sorte que chaque première gorge (22) soit tournée vers une seconde gorge (32) ayant approximativement la même largeur que la première gorge (22), et qu'une position de la première gorge (22) coïncide substantiellement avec une position de la seconde gorge (32) dans une direction de la largeur ;
fixation par soudage par diffusion du premier élément de plaque (24₁, 24₃) et du second élément de plaque (34₁, 34₃) qui ont été recouverts ; et
cintrage du premier (24₁, 24₃) et du second (34₁, 34₃) éléments de plaque fixés, par cintrage pour former une plaque courbée creuse (20, 50),
dans lequel la première gorge (22) et la seconde gorge (32) forment une pluralité de parties creuses (40₁, 40₃), chacune des parties creuses étant formée en un canal linéaire, **caractérisé en ce que**
les orifices d'aspiration d'air (28) et les orifices de refoulement d'air (29) sont ouverts chacun vers l'une des parties creuses (40₁, 40₃), chacun des orifices d'aspiration d'air (28) et des orifices de refoulement d'air (29) ayant un diamètre supérieur à la largeur totale de l'une quelconque desdites parties creuses où s'ouvre chacun desdits orifices d'aspiration d'air (28) et orifices de refoulement d'air (29).

8. Le procédé de fabrication de la plaque cintrée creuse (20, 50) selon la revendication 7,
dans lequel un orifice de positionnement (36) est formé dans chacun du premier élément de plaque (24₁, 24₃) et du second élément de plaque (34₁, 34₃), et
dans lequel, à l'étape de recouvrement, le positionnement du premier élément de plaque (24₁, 24₃) et du second élément de plaque (34₁, 34₃) est effectué par insertion d'une broche (46) dans les orifices de positionnement (36) du premier élément de plaque (24₁, 24₃) et du second élément de plaque (341, 34₃) de telle sorte que la position de la première gorge (22) coïncide substantiellement avec la position de la seconde gorge (32) dans la direction de la largeur.

9. Le procédé de fabrication de la plaque cintrée creuse (20, 50) selon la revendication 7,
dans lequel un relief (37) est formé dans l'un du premier élément de plaque (24₁, 24₃) ou du second élément de plaque (34₁, 34₃) et un creux (27) est formé dans l'autre du premier élément de plaque (24₁, 24₃) et du second élément de plaque (34₁, 34₃), et dans lequel, à l'étape de recouvrement, le positionnement du premier élément de plaque (24₁, 24₃) et du second élément de plaque (34₁, 34₃) est effectué par ajustement du relief (37) dans le creux (27) de telle sorte que la position de la première gorge (22) coïncide substantiellement avec la position de la seconde gorge (32) dans la direction de la largeur.
